# EUROPEAN PATENT APPLICATION

(11) **EP 4 624 279 A1**
(43) Date of publication of application: **01.10.2025**
(21) Application number: 23894487.0
(22) Date of filing: 15.11.2023
(51) Int. Cl.: B60R 22/46

(54) **GAS GENERATOR**

(30) Priority: 24.11.2022 JP 2022187396
(71) Applicant: Nippon Kayaku Kabushiki Kaisha, Tokyo 100-0005 (JP)
(72) Inventor: KOYAMA, Hiroaki, Himeji-shi, Hyogo 679-2123 (JP)
(74) Representative: TBK
(86) International application number: PCT/JP2023/041070
(87) International publication number: WO 2024/111478

(57) **Abstract**

A gas generator (1) includes a holder (10) made of metal, an igniter assembly (2) including an igniter (20) and a resin molded portion (30), a cup (40), and a gas generating agent (50). The cup (40) includes a flange portion (43), and the igniter assembly (2) is provided with an annular groove where the flange portion (43) is received. The annular groove has an inner wall surface defined by an outer circumferential surface of a first cover portion (31) of the resin molded portion, has a bottom surface defined by a first end surface (10a) of the holder (10), and has an outer wall surface defined by an inner circumferential surface of an annular collar portion (13) provided in the holder (10). As the annular collar portion (13) is bent inward, the cup (40) is assembled to the holder (10) with a boundary between the first end surface (10a) of the holder (10) and the outer circumferential surface of the first cover portion (31) being covered with a sealant (60) applied to the inside of the annular groove.

## Description

### TECHNICAL FIELD

The present invention relates to a gas generator, and particularly to a compact gas generator constructed to generate a relatively small amount of gas at the time of activation.

### BACKGROUND ART

From a point of view of protection of a driver and/or a passenger in a car or the like, a seat belt apparatus which is a passenger protection apparatus has conventionally widely been used. The seat belt apparatus is equipped for the purpose of protecting a driver and/or a passenger against shock caused at the time of collision of a vehicle or the like, and it binds the driver and/or the passenger to a seat by winding a belt around the body of the driver and/or the passenger. The driver and/or the passenger is/are thus prevented from being thrown out within the vehicle or thrown out of the vehicle at the time of collision of the vehicle or the like.

Among seat belt apparatuses, in a seat belt apparatus including what is called a pretensioner, a compact gas generator referred to as a micro gas generator is incorporated. The pretensioner is an apparatus that winds up sag of a seat belt caused by a thickness or the like of clothing, instantaneously at the time of sensing of collision of the vehicle or the like, and such a function is performed by strong draw-in of one end of the seat belt by a pressure of gas outputted from the gas generator.

In general, a gas generator of this type is manufactured by fixing a substantially cylindrical cup with bottom in which a gas generating agent is loaded to an igniter assembly, the igniter assembly being obtained by assembly of an igniter for burning of the gas generating agent to a holder in advance.

A structure for assembly of the igniter to the holder is various. An assembly structure for assembly of the igniter to the holder by injection molding (more specifically, insert molding) made of a resin material as a source material has been known as one of such assembly structures. For example, Japanese Patent Laying-Open No. 2003-161599 (PTL 1), Japanese Utility Model No. 3134430 (PTL 2), Japanese Patent Laying-Open No. 2010-276263 (PTL 3), Japanese Patent Laying-Open No. 2019-99022 (PTL 4), and the like disclose such assembly structures.

### CITATION LIST

### PATENT LITERATURE

PTL 1: Japanese Patent Laying-Open No. 2003-161599
PTL 2: Japanese Utility Model No. 3134430
PTL 3: Japanese Patent Laying-Open No. 2010-276263
PTL 4: Japanese Patent Laying-Open No. 2019-99022

### SUMMARY OF INVENTION

### TECHNICAL PROBLEM

In assembly of the igniter to the holder by injection molding by adopting the resin material as the source material, sealing performance should reliably be secured for a long time at an interface between a resin molded portion formed by injection molding and the holder. In this connection, in PTLs 1 to 4 described above, various projections and recesses such as a standing wall portion and a groove are provided at a surface of a portion of the holder to be covered with the resin molded portion to secure sealing performance.

In order to secure sealing performance by providing various projections and recesses such as the standing wall portion and the groove at the surface of the holder, however, highly accurate cutting of the holder is required, which is a factor for significant increase in manufacturing cost.

Therefore, the present invention was made to solve the problems described above, and an object thereof is to provide a gas generator that can reliably secure sealing performance for a long time at an interface between a resin molded portion and a holder and can inexpensively be manufactured.

### SOLUTION TO PROBLEM

A gas generator based on the present invention includes a gas generating agent that generates gas by burning, a substantially cylindrical cup with bottom where the gas generating agent is accommodated, the cup having one axial end constructed as an open end, and an igniter assembly having a substantially columnar outer geometry, the igniter assembly closing the open end of the cup by coaxial assembly of the cup. The igniter assembly includes an igniter including an ignition portion loaded with an ignition agent and a terminal pin connected to the ignition portion, a holder in a substantially columnar shape made of metal, the holder including a first end surface which is an axial end surface on a side facing the cup, a second end surface which is an axial end surface on a side not facing the cup, and a through portion through which at least a part of the igniter is inserted, the through portion reaching the first end surface and the second end surface, and a resin molded portion that fixes the igniter to the holder by filling a space between the igniter and the holder such that the ignition portion faces the gas generating agent. The first end surface of the holder is provided with an annular collar portion in a projecting shape as surrounding the through portion. The resin molded portion includes a first cover portion secured to a portion of the first end surface of the holder located around the through portion to cover that portion, a second cover portion secured to a portion of the second end surface of the holder located around the through portion to cover that portion, and a connection portion that connects the first cover portion and the second cover portion to each other by burying the through portion. The cup includes a flange portion that extends outward from the open end, and an axial end surface of the igniter assembly on the side facing the cup is provided with an annular groove where the flange portion is to be received. The annular groove has an inner wall surface defined by an outer circumferential surface of the first cover portion, the annular groove has a bottom surface defined by the first end surface of the holder, and the annular groove has an outer wall surface defined by an inner circumferential surface of the annular collar portion. In the gas generator based on the present invention, as the annular collar portion is bent inward with a sealant having been applied to inside of the annular groove and the flange portion being received in the annular groove, the flange portion is sandwiched between the annular collar portion and the bottom surface of the annular groove with a boundary between the first end surface of the holder exposed on the inside of the annular groove and the outer circumferential surface of the first cover portion being covered with the sealant, so that the cup is assembled to the holder.

### ADVANTAGEOUS EFFECTS OF INVENTION

According to the present invention, a gas generator that can reliably secure sealing performance for a long time at an interface between a resin molded portion and a holder and can inexpensively be manufactured can be provided.

### BRIEF DESCRIPTION OF DRAWINGS

Fig. 1 is a schematic cross-sectional view of a gas generator according to an embodiment.
Fig. 2 is a schematic cross-sectional view along the line II-II shown in Fig. 1.
Fig. 3 is an enlarged view of an area III shown in Fig. 1.
Fig. 4 is a schematic cross-sectional view of an igniter assembly in the course of manufacturing of the gas generator shown in Fig. 1.
Fig. 5 is a schematic cross-sectional view showing a method of manufacturing the gas generator shown in Fig. 1.
Fig. 6 is a schematic cross-sectional view showing the method of manufacturing the gas generator shown in Fig. 1.
Fig. 7 is a schematic cross-sectional view showing the method of manufacturing the gas generator shown in Fig. 1.
Fig. 8 is a schematic cross-sectional view showing the method of manufacturing the gas generator shown in Fig. 1.
Fig. 9 is a schematic cross-sectional view showing a state in which the gas generator shown in Fig. 1 has been incorporated in a pretensioner.
Fig. 10 is a schematic cross-sectional view showing a method of attaching a shorting clip to the gas generator shown in Fig. 1.

### DESCRIPTION OF EMBODIMENTS

An embodiment of the present invention will be described hereinafter in detail with reference to the drawings. An embodiment shown below represents application of the present invention to a gas generator (what is called a micro gas generator) suitably incorporated in a seat belt apparatus including a pretensioner. The same or common elements in the embodiment shown below have the same reference characters allotted in the drawings and description thereof will not be repeated.

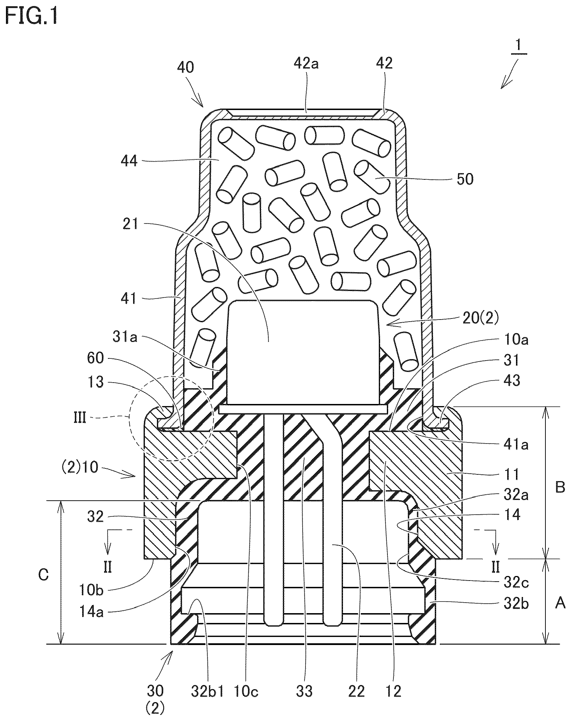

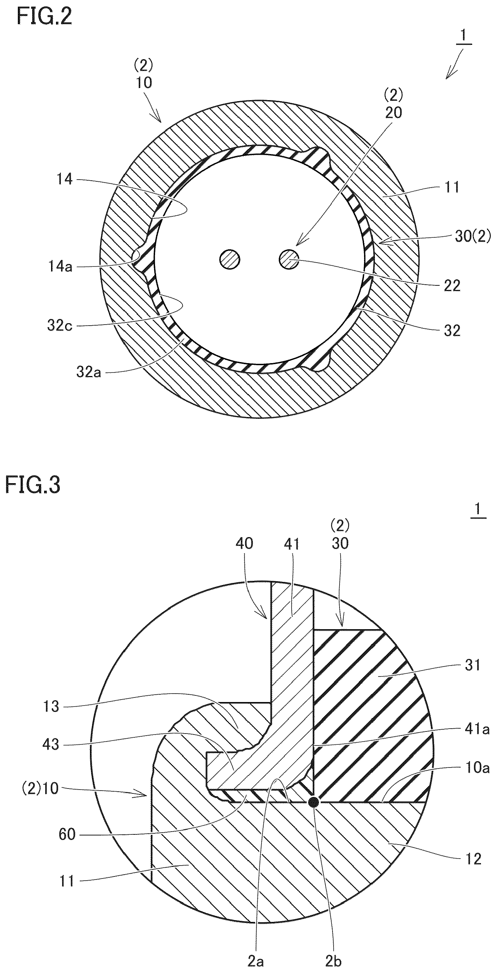

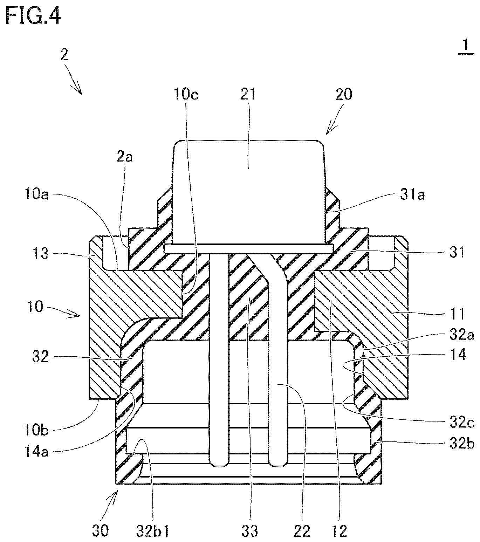

Fig. 1 is a schematic cross-sectional view of a gas generator according to an embodiment. Fig. 2 is a schematic cross-sectional view along the line II-II shown in Fig. 1. Fig. 3 is an enlarged view of an area III shown in Fig. 1 and Fig. 4 is a schematic cross-sectional view of an igniter assembly in the course of manufacturing of the gas generator shown in Fig. 1. A construction of a gas generator 1 according to the present embodiment will initially be described with reference to Figs. 1 to 4.

As shown in Figs. 1 to 3, gas generator 1 according to the present embodiment includes a holder 10, an igniter assembly 2 having a substantially columnar outer geometry and including an igniter 20 and a resin molded portion 30, a substantially cylindrical cup 40 with bottom, a gas generating agent 50, and a sealant 60. In gas generator 1, cup 40 is arranged coaxially with igniter assembly 2 and assembled thereto. Thus, a housing that serves as an outer shell of gas generator 1 is composed of holder 10 and resin molded portion 30 in igniter assembly 2 and cup 40.

Gas generating agent 50 is accommodated in a space defined by igniter assembly 2 and cup 40. Igniter 20 is fixed to holder 10 with resin molded portion 30 being interposed, such that an ignition portion 21 thereof faces gas generating agent 50. Sealant 60 is provided as being interposed at a prescribed part between cup 40 and igniter assembly 2, details of which will be described later.

As shown in Figs. 1 and 2, holder 10 is a member that holds igniter 20 and cup 40, and it has a substantially columnar outer geometry. In the present embodiment, holder 10 is provided with a recessed portion 14 and a through portion 10c which will be described later, and hence holder 10 is substantially in a substantially cylindrical shape.

More specifically, holder 10 includes a cylindrical barrel portion 11 and a partition wall portion 12 substantially in a disc shape located on the inside of barrel portion 11 and at an axial end of barrel portion 11 on a side of cup 40. In a center of partition wall portion 12, through portion 10c like an opening is located, and recessed portion 14 is located on the inside of barrel portion 11 and at an axial end of barrel portion 11 opposite to the side of cup 40. Through portion 10c and recessed portion 14 communicate with each other.

Holder 10 is provided with a first end surface 10a which is the axial end surface on the side facing cup 40, and first end surface 10a is defined by the axial end surface of barrel portion 11 on the side of cup 40 and a main surface of partition wall portion 12 on the side of cup 40. Holder 10 is provided with a second end surface 10b which is the axial end surface on the side not facing the cup, and second end surface 10b is defined by the axial end surface of barrel portion 11 opposite to the side of cup 40 and a main surface of partition wall portion 12 opposite to the side of cup 40 (more strictly, the main surface is provided with recessed portion 14 described above and hence the main surface corresponds to a surface of recessed portion 14). Through portion 10c described above reaches both of first end surface 10a and second end surface 10b of holder 10.

At first end surface 10a of holder 10, an annular collar portion 13 in a projecting shape is provided as surrounding through portion 10c. Annular collar portion 13 is a part for fixing by swaging of a later-described flange portion 43 of cup 40. In fixing by swaging, annular collar portion 13 is bent inward to sandwich flange portion 43 between annular collar portion 13 and first end surface 10a to immovably fix cup 40 to holder 10. Annular collar portion 13 is located at an outer edge portion of first end surface 10a, so that first end surface 10a described above is located between through portion 10c and annular collar portion 13.

Holder 10 is also a member that forms a part of the housing as described above, and it is formed, for example, of a formed article composed of a metallic material such as aluminum or an aluminum alloy. Holder 10 is formed in a shape as shown in Fig. 4, by forging, punching, cutting, and the like performed in a prescribed order once or a plurality of times as necessary, for example, onto a plate-shaped metallic member or a rod-shaped metallic member provided as a source material.

Igniter 20 serves to produce flames, and it is also referred to as a squib. Igniter 20 includes ignition portion 21, and a pair of terminal pins 22. Ignition portion 21 contains an ignition agent that produces flames by being ignited to burn at the time of activation and a resistor (bridge wire) for ignition of the ignition agent. The pair of terminal pins 22 is connected to ignition portion 21 for ignition of the ignition agent.

More specifically, ignition portion 21 includes a squib cup formed like a cup. The resistor described above is attached to couple tip ends of the pair of terminal pins 22 inserted in the squib cup, and the ignition agent is loaded in the squib cup so as to surround the resistor or to be in proximity to the resistor.

Here, a Nichrome wire or the like is generally made use of as a resistor, and ZPP (zirconium potassium perchlorate), ZWPP (zirconium tungsten potassium perchlorate), lead tricinate, or the like is generally made use of as the ignition agent. The squib cup described above is generally made of metal or plastic.

Upon sensing collision, a prescribed amount of current flows in the resistor through terminal pins 22. As the prescribed amount of current flows in the resistor, Joule heat is generated in the resistor and the ignition agent starts burning. Flame at a high temperature caused by being burnt bursts the squib cup accommodating the ignition agent. A time period from flow of a current in the resistor until activation of igniter 20 is generally not longer than 2 milliseconds in a case that the Nichrome wire is employed as the resistor.

Igniter 20 is attached to holder 10 while terminal pins 22 are inserted in through portion 10c provided in partition wall portion 12 of holder 10. Specifically, resin molded portion 30 described above is provided around holder 10 so as to fill the space between holder 10 and igniter 20, and igniter 20 is assembled to holder 10 by being held by resin molded portion 30.

Resin molded portion 30 is formed by injection molding (more specifically, insert molding) with the use of a mold. Resin molded portion 30 is formed by attaching an insulating fluid resin material to holder 10 to reach a part of second end surface 10b from a part of first end surface 10a of holder 10 through through portion 10c provided in partition wall portion 12 of holder 10 and solidifying the fluid resin material.

In molding of resin molded portion 30, igniter 20 is inserted with a side of first end surface 10a of holder 10 ahead such that terminal pins 22 are inserted through through portion 10c. By injection of the fluid resin material described above to fill the space between igniter 20 and holder 10 in this state, igniter 20 is fixed to holder 10 with resin molded portion 30 being interposed.

A size of through portion 10c provided in holder 10 is constructed to be smaller than an outer geometry of ignition portion 21 which is a largest outer geometry portion of igniter 20. According to such a construction, even if unexpected damage occurs in resin molded portion 30, igniter 20 can be prevented from coming out of the housing through through portion 10c upon increase in internal pressure in an accommodation space 44 (that is, a space where gas generating agent 50 is accommodated) which will be described later, and safe operation of gas generator 1 is ensured.

A resin material excellent in heat resistance, durability, corrosion resistance, or the like after it is cured is suitably selected and used as a source material for resin molded portion 30 formed by injection molding. In that case, without being limited to thermosetting resin represented by epoxy resin or the like, thermoplastic resin represented by polybutylene terephthalate resin, polyethylene terephthalate resin, polyamide resin (for example, nylon 6, nylon 66, or the like), polypropylene sulfide resin, polypropylene oxide resin, or the like can also be used. When such thermoplastic resin is selected as the source material, glass fibers or the like are preferably contained as a filler in the resin material in order to ensure mechanical strength of resin molded portion 30 after molding. When sufficient mechanical strength can be ensured only with the thermoplastic resin, however, the filler as described above does not have to be added.

Resin molded portion 30 includes a first cover portion 31 that covers a part of first end surface 10a of holder 10, a second cover portion 32 that covers a part of second end surface 10b of holder 10, and a connection portion 33 that is located in through portion 10c provided in partition wall portion 12 of holder 10 and connects first cover portion 31 and second cover portion 32 to each other.

Resin molded portion 30 is secured to holder 10 at surfaces on a side of holder 10, of first cover portion 31, second cover portion 32, and connection portion 33. Resin molded portion 30 is secured to a side surface and a lower surface of a portion closer to a lower end of ignition portion 21 of igniter 20 and a surface of a portion closer to an upper end of terminal pin 22 of igniter 20. Through portion 10c is thus completely buried with terminal pins 22 and resin molded portion 30, so that sealing performance at that portion is secured and hermeticity of the space inside the housing is secured.

First cover portion 31 is formed to cover a portion of first end surface 10a of holder 10, that is adjacent to through portion 10c, and it has an outer edge located on a further inner side, at a distance from annular collar portion 13 without reaching annular collar portion 13. Therefore, first end surface 10a of holder 10 has a portion on a side of the outer edge exposed without being covered with first cover portion 31.

First cover portion 31 is provided with a reinforcement portion 31a provided as projecting upward along the side surface of ignition portion 21 of igniter 20. Reinforcement portion 31a is a part for adjusting a degree of opening of the squib cup of igniter 20 that cleaves at the time of activation of gas generator 1 (that is, preventing the squib cup from excessively opening). By providing this reinforcement portion 31a, thermal particles generated by activation of igniter 20 can have directivity, and thermal particles can efficiently be guided to gas generating agent 50.

Second cover portion 32, on the other hand, is formed to include a first portion 32a that covers a surface of recessed portion 14 in second end surface 10b of holder 10 and a second portion 32b that projects from second end surface 10b of holder 10 in a portion of holder 10 where recessed portion 14 is not provided (that is, second end surface 10b in a portion defined by barrel portion 11) toward a side opposite to the side where cup 40 is located. Second cover portion 32 is further provided with a recessed female connector portion 32c across first portion 32a and second portion 32b.

In female connector portion 32c, the pair of terminal pins 22 of igniter 20 is located as being exposed, so that female connector portion 32c functions as a part for receiving and holding a male connector (not shown) for external connection of igniter 20 through the pair of terminal pins 22. Specifically, as a male connector of a harness connected to a control unit (not shown) is inserted in this female connector portion 32c, electrical conduction between a core of the harness and terminal pins 22 is achieved and thus igniter 20 and the control unit are connected to each other.

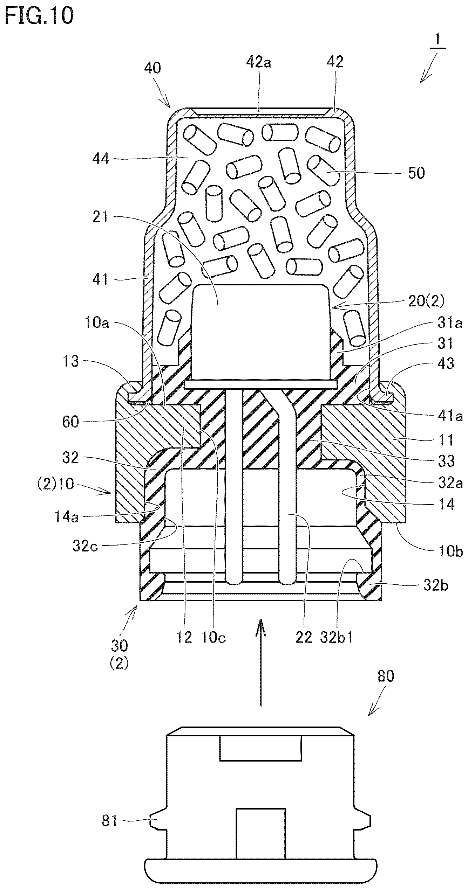

A portion of an inner surface of female connector portion 32c defined by second portion 32b described above (that is, a portion of second cover portion 32 that projects from second end surface 10b of holder in the portion of holder 10 not provided with recessed portion 14) is provided with a locking portion 32b1 in a recessed shape for holding a shorting clip 80 (see Fig. 10).

In gas generator 1 according to the present embodiment, a plurality of grooves 14a that reach second end surface 10b of holder 10 in the portion of holder 10 not provided with recessed portion 14 from through portion 10c provided in partition wall portion 12 of holder 10 are provided in the surface of recessed portion 14. Grooves 14a are provided as being scattered along a circumferential direction of holder 10. In the present embodiment, as shown in Fig. 2, three grooves 14a are provided as arranged equidistantly along the circumferential direction. Second cover portion 32 of resin molded portion 30 buries these grooves 14a.

According to such a construction, grooves 14a are engaged with portions of second cover portion 32 that bury the grooves, and resin molded portion 30 can be prevented from rotating with respect to holder 10. According to such a construction, moldability of resin molded portion 30 in injection molding is significantly improved, which will be described in detail later.

In gas generator 1 according to the present embodiment, as shown in Fig. 1, a condition of B < 1.8×A (which will be referred to as a "first condition" below) is satisfied where A represents a projecting length of second portion 32b of second cover portion 32 and B represents an axial length of holder 10 in a state after assembly of cup 40 to holder 10 (that is, an axial distance of holder 10 from an upper end of bent annular collar portion 13 to second end surface 10b of holder 10 in the portion not provided with recessed portion 14).

In addition, in gas generator 1 according to the present embodiment, as shown in Fig. 1, a condition of C < 1.8×A (which will be referred to as a "second condition" below) is further satisfied where A represents the projecting length and C represents a depth of female connector portion 32c.

As at least one of the first condition and the second condition is satisfied, projecting length A of second portion 32b of second cover portion 32 can noticeably be long. An effect of facilitation of insertion of the male connector after assembly of gas generator 1 which will be described later to the pretensioner and an effect of increase in amount of filled gas generating agent 50 without increase in size of cup 40 can thus be obtained. Those effects will be described in detail later.

Igniter assembly 2 composed of holder 10, igniter 20, and resin molded portion 30 described above is manufactured as a single component integrated by assembly thereof in advance in manufacturing of gas generator 1. Thereafter, by assembly of cup 40, gas generating agent 50, and sealant 60 which are remaining components to igniter assembly 2 which is the single component, gas generator 1 is manufactured.

Therefore, at a time point of manufacturing of igniter assembly 2 as shown in Fig. 4, above-described annular collar portion 13 provided at first end surface 10a of holder 10 has not yet been bent inward but erected along the axial direction of holder 10. Therefore, in this state, while annular groove 2a for receiving flange portion 43 of cup 40 is open to the outside, it is located in the axial end surface of igniter assembly 2 on a side of assembly of cup 40. Annular groove 2a has an inner wall surface (that is, a side surface located on a radially inner side) defined by the outer circumferential surface of first cover portion 31 of resin molded portion 30, has a bottom surface defined by first end surface 10a in an exposed portion of holder 10, and has an outer wall surface (that is, a side surface located on a radially outer side) defined by an inner circumferential surface of annular collar portion 13 provided in holder 10.

As shown in Figs. 1 and 3, cup 40 is formed from a substantially cylindrical member with bottom having one axial end as an open end 41a, and includes a sidewall portion 41, a bottom wall portion 42, and flange portion 43. Gas generating agent 50 is accommodated in accommodation space 44 in cup 40 defined by sidewall portion 41 and bottom wall portion 42.

Open end 41a described above is defined by an end of a pair of axial ends of sidewall portion 41, which is located opposite to a side where bottom wall portion 42 is located. Flange portion 43 is located to extend outward from this open end 41a. Flange portion 43 is a part for fixing cup 40 to holder 10.

As a cut like a groove is provided in a surface of bottom wall portion 42 of cup 40, bottom wall portion 42 is provided with a score 42a. This score 42a is provided to form at a prescribed position in bottom wall portion 42, a weak portion which is weaker than other positions. By providing score 42a, cup 40 starts to open from this portion at the time of activation of gas generator 1.

Cup 40 is also a member that forms a part of the housing, and it is made of a formed article composed of a metallic material such as an iron-based material containing aluminum, an aluminum alloy, and stainless steel. Press working or the like with the use of a mold is generally employed for forming cup 40.

As described above, cup 40 is assembled to holder 10 in such a manner that flange portion 43 thereof is fixed by swaging by annular collar portion 13 provided in holder 10. Specifically, while flange portion 43 of cup 40 is located in above-described annular groove 2a provided in igniter assembly 2, annular collar portion 13 is bent inward so that cup 40 is fixed to igniter assembly 2.

Gas generating agent 50 generates a large amount of gas by being ignited by igniter 20 to burn. A molding of smokeless powders (nitrocellulose), a molding of a non-azide-based composition composed of an organic nitrogen compound and an oxidizing agent, or the like is employed as gas generating agent 50. Use as gas generating agent 50, of a non-nitrocellulose-based gas generating agent extremely small in amount of generation of a harmful substance such as carbon monoxide has recently attracted attention.

Moldings in various shapes such as a granule, a pellet, a column, and a disc shape can be employed as the molding of gas generating agent 50. A molding with a hole (for example, a molding like a macaroni, a molding like a lotus root, or the like) with a through hole can also be employed as the molding of gas generating agent 50. An optimal shape in conformity with specifications of the pretensioner to which gas generator 1 is to be assembled is selected. A size or the like of the molding of gas generating agent 50 is selected in consideration of a linear burning velocity, a pressure index, or the like in addition to the shape. Though an amount of loaded gas generating agent 50 may be modified as appropriate in conformity with the specifications of the pretensioner to which the gas generator is to be assembled, the amount is generally set to approximately 0.1 g to 2.0 g in an example where smokeless powders are employed.

As shown in Figs. 1 and 3, while cup 40 is assembled to igniter assembly 2, flange portion 43 of cup 40 is accommodated in annular groove 2a of igniter assembly 2 as described above, and flange portion 43 is sandwiched between annular collar portion 13 and the bottom surface of annular groove 2a. Sealant 60 is interposed between annular collar portion 13 and annular groove 2a.

Sealant 60 serves to hermetically seal accommodation space 44 where gas generating agent 50 is accommodated against an external space. Specifically, the sealant serves to prevent flow of gas through an interface between holder 10 and cup 40 and an interface between holder 10 and resin molded portion 30.

Specifically, sealant 60 is mainly located to fill a space defined by the bottom surface of annular groove 2a defined by first end surface 10a of holder 10, a portion on a lower side of the outer wall surface of annular groove 2a defined by the inner circumferential surface of annular collar portion 13 of holder 10, a lower portion of the inner wall surface of annular groove 2a defined by the outer circumferential surface of first cover portion 31 of resin molded portion 30, and the lower surface of flange portion 43 of cup 40. Thus, the sealant is interposed between holder 10 and cup 40 and covers a boundary 2b between first end surface 10a of holder 10 exposed in annular groove 2a and the outer circumferential surface of first cover portion 31.

Any sealant may be employed as sealant 60 so long as it exhibits sealing performance after it is cured. A sealant is preferably moderately elastic after it is cured, and for example, a sealant containing silicone-based resin or polyolefin-based resin as a source material can suitably be used.

Sealant 60 in a liquid state is applied to the inside of annular groove 2a prior to fixing by swaging of flange portion 43 by annular collar portion 13 described above. As flange portion 43 is inserted in annular groove 2a in this state and flange portion 43 is fixed by swaging by annular collar portion 13, the sealant is formed as being interposed between holder 10, resin molded portion 30, and cup 40 in a manner described above. Sealant 60 applied in the liquid state may be cured before or after fixing by swaging. In order to more reliably secure sealing performance of sealant 60, the sealant is preferably cured after fixing by swaging.

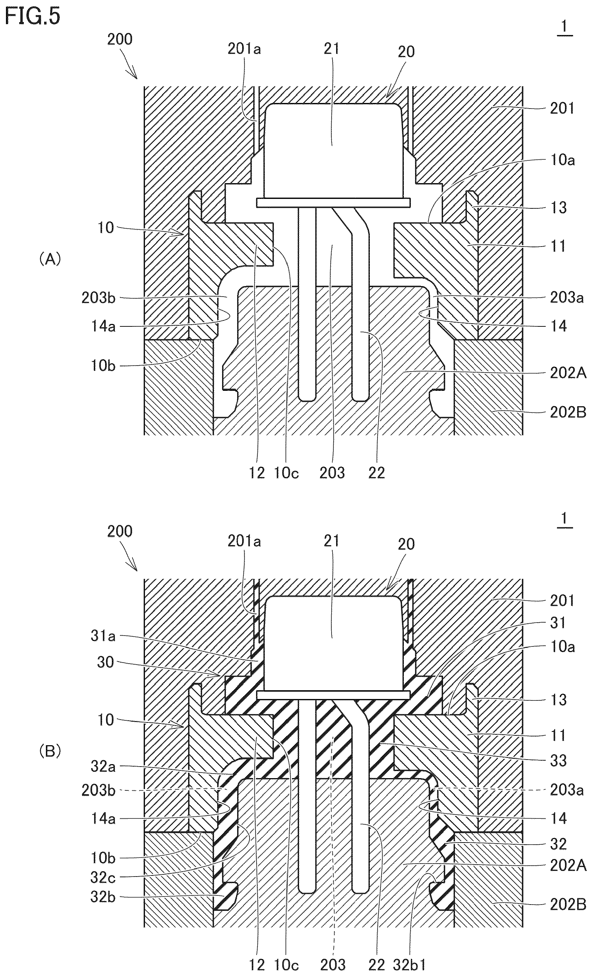

Figs. 5 to 8 are schematic cross-sectional views showing a method of manufacturing the gas generator according to the present embodiment. A method of manufacturing gas generator 1 according to the present embodiment will now be described with reference to Figs. 5 to 8.

In manufacturing gas generator 1 according to the present embodiment, holder 10 is initially prepared. Holder 10 is made by forging, punching, cutting, and the like performed in a prescribed order once or a plurality of times as necessary on a plate-shaped metallic member or a rod-shaped metallic member provided as a source material as described above. Holder 10 provided in gas generator 1 according to the present embodiment does not include a part in a complicated shape at a surface of a portion to be covered with resin molded portion 30 later. Therefore, highly accurate cutting which is a factor for increase in cost is not required.

Then, as shown in Fig. 5(A), holder 10 and igniter 20 are set in a mold 200 for injection molding composed of an upper mold 201, a lower inner mold 202A, and a lower outer mold 202B. Specifically, of lower inner mold 202A and lower outer mold 202B in a state combined in advance, holder 10 is set in lower outer mold 202B, and in this state, igniter 20 is set in lower inner mold 202A in such a manner that the pair of terminal pins 22 of igniter 20 is inserted through through portion 10c of holder 10. Furthermore, thereafter, upper mold 201 is combined with lower inner mold 202A and lower outer mold 202B to cover holder 10 and igniter 20, so that a cavity 203 in conformity with resin molded portion 30 is provided around holder 10 and igniter 20 located on the inside of mold 200.

Then, as shown in Fig. 5(B), resin molded portion 30 is formed by injection molding. Specifically, an insulating fluid resin material is injected from a gate 201a provided in upper mold 201 into cavity 203, so that cavity 203 is filled with the fluid resin material. Thereafter, the fluid resin material filled in cavity 203 is solidified and secured to the surfaces of holder 10 and igniter 20, so that resin molded portion 30 that fixes holder 10 and igniter 20 to each other is formed.

From a point of view of enhancement of moldability of resin molded portion 30, it is important that the fluid resin material injected into cavity 203 spreads throughout cavity 203. In particular, when no measures are taken, in consideration of a structure of resin molded portion 30, flow of the fluid resin material may be blocked at a position corresponding to a portion of resin molded portion 30 that covers second end surface 10b of holder 10 (that is, above-described first portion 32a of second cover portion 32) which is a portion smallest in cross-sectional area of cavity 203 in a direction orthogonal to a direction flow of the fluid resin material.

In this regard, in gas generator 1 according to the present embodiment, as described above, the plurality of grooves 14a that reach second end surface 10b in the portion of the holder where recessed portion 14 is not provided from through portion 10c provided in partition wall portion 12 are provided in the surface of recessed portion 14 in holder 10. Therefore, the cross-sectional area of cavity 203 in a region facing the portion where the plurality of grooves 14a are provided is larger than the cross-sectional area of cavity 203 in a region facing the portion where the plurality of grooves 14a are not provided. In other words, cavity 203 in the region facing the portion where the plurality of grooves 14a are not provided is provided as a narrow channel 203a where the fluid resin material flows, whereas cavity 203 in the region facing the portion provided with the plurality of grooves 14a is provided as a wide channel 203b where the fluid resin material flows.

Therefore, by thus providing wide channel 203b where the fluid resin material flows in a part of the portion of cavity 203 smallest in cross-sectional area in the direction orthogonal to the direction of flow of the fluid resin material, spread of the fluid resin material in cavity 203 is improved. As the fluid resin material fully spreads in cavity 203, moldability of resin molded portion 30 is drastically improved.

In addition, as described above, gas generator 1 according to the present embodiment is constructed such that projecting length A of second portion 32b of second cover portion 32, axial length B of holder 10 in the state after assembly of cup 40 to holder 10, and depth C of female connector portion 32c (see Fig. 1 for each of them) satisfy the first condition (that is, the condition of B < 1.8×A) and/or the second condition (that is, the condition of C < 1.8×A) described above and projecting length A of second portion 32b of second cover portion 32 is noticeably long.

Therefore, the length of narrow channel 203a described above is naturally shorter relative to the length of projecting length A of second portion 32b of second cover portion 32. Thus, also in this regard, spread of the fluid resin material in cavity 203 is improved and moldability of resin molded portion 30 is drastically improved.

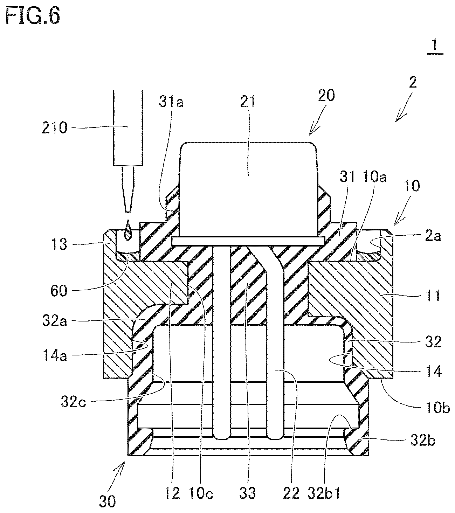

Then, igniter assembly 2 composed of holder 10, igniter 20, and resin molded portion 30 manufactured as a result of formation of resin molded portion 30 is taken out of mold 200, and thereafter, sealant 60 is applied as shown in Fig. 6. Specifically, liquid sealant 60 is applied, for example, with the use of a dispenser 210 to annular groove 2a in igniter assembly 2 defined by the outer circumferential surface of first cover portion 31 of resin molded portion 30, first end surface 10a of holder 10, and the inner circumferential surface of annular collar portion 13 of holder 10. At this time, liquid sealant 60 in an amount sufficient to cover after curing, boundary 2b between first end surface 10a of holder 10 and the outer circumferential surface of first cover portion 31 exposed in annular groove 2a is applied.

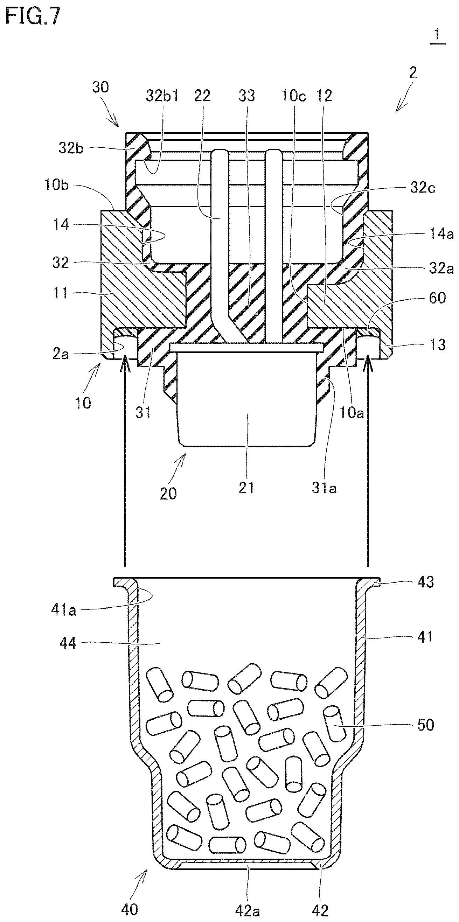

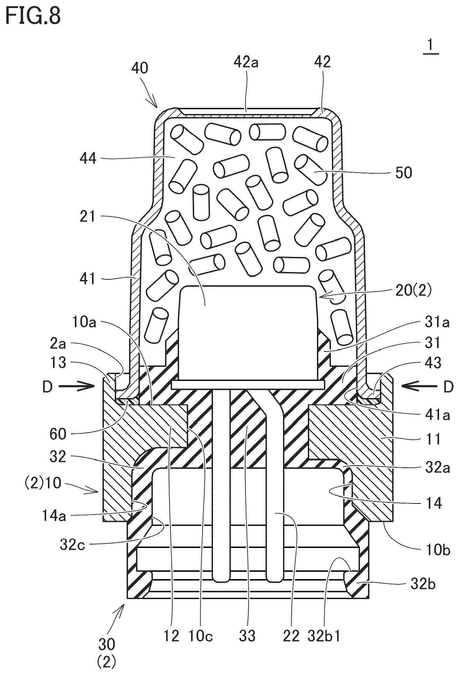

Then, as shown in Figs. 7 and 8, cup 40 is assembled to igniter assembly 2. Specifically, initially, as shown in Fig. 7, flange portion 43 of cup 40 where a prescribed amount of gas generating agent 50 has been accommodated is inserted in annular groove 2a of igniter assembly 2 in which liquid sealant 60 has been applied to the inside of annular groove 2a. In succession, while a state in which flange portion 43 is received in annular groove 2a as shown in Fig. 8 is maintained, annular collar portion 13 provided in holder 10 is bent inward (that is, toward a direction shown with an arrow D in the figure) for fixing by swaging of flange portion 43 by annular collar portion 13.

Thus, flange portion 43 is sandwiched between annular collar portion 13 and the bottom surface of annular groove 2a while boundary 2b (see Fig. 3) between first end surface 10a of holder 10 and the outer circumferential surface of first cover portion 31 of resin molded portion 30 exposed in annular groove 2a is covered with sealant 60, and thus cup 40 is assembled to igniter assembly 2.

As described above, sealant 60 is cured before or after fixing by swaging of flange portion 43 by annular collar portion 13. Manufacturing of gas generator 1 as shown in Fig. 1 is thus completed. Sealant 60 not only covers boundary 2b described above but also is interposed between holder 10 and cup 40. Therefore, with sealant 60, hermeticity in both of a portion between holder 10 and cup 40 and a portion between holder 10 and resin molded portion 30 can be secured.

As described above, in gas generator 1 according to the present embodiment, not only sealing performance can reliably be secured with sealant 60 for a long time at the interface between resin molded portion 30 and holder 10 but also the gas generator that does not require highly accurate cutting and can inexpensively be manufactured can be obtained.

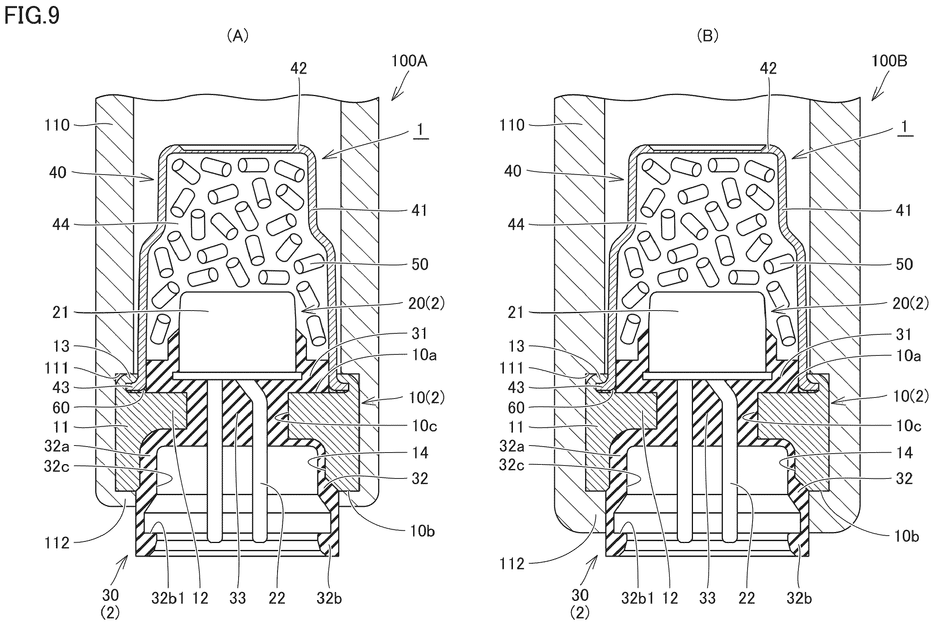

Fig. 9(A) and (B) is a schematic cross-sectional view showing an exemplary state and another exemplary state in which the gas generator according to the present embodiment has been incorporated in the pretensioner. A structure of assembly of gas generator 1 according to the present embodiment to the pretensioner will now be described with reference to Fig. 9(A) and (B).

As shown in Fig. 9(A), in incorporation of gas generator 1 in a pretensioner 100A provided in a seat belt apparatus, gas generator 1 is assembled to a substantially cylindrical casing 110 of pretensioner 100A.

More specifically, initially, gas generator 1 is inserted into casing 110 with an axial end on the side where cup 40 is located ahead. At this time, the upper end of annular collar portion 13 provided in holder 10 of gas generator 1 abuts on a step portion 111 provided at an inner circumferential surface of casing 110 so as to position gas generator 1 with respect to casing 110. In a state after positioning, second portion 32b of second cover portion 32 of resin molded portion 30 of gas generator 1 and a portion on a tip end side of casing 110 are opposed to each other in a radial direction of casing 110.

Then, in this state, a portion on the tip end side of casing 110 is bent inward (that is, toward a side of second portion 32b of above-described second cover portion 32 of gas generator 1), so that a swaged portion 112 which is a bent portion of casing 110 and step portion 111 described above sandwich barrel portion 11 of holder 10 of gas generator 1 and thus gas generator 1 is fixed by swaging to casing 110.

As set forth above, gas generator 1 is assembled to pretensioner 100A. In this state in which gas generator 1 has been assembled to pretensioner 100A, second portion 32b of above-described second cover portion 32 of gas generator 1 projects relatively to the tip end of casing 110. Therefore, this second portion 32b of second cover portion 32 serves as a guide and insertion of the male connector in female connector portion 32c provided in second cover portion 32 is facilitated.

In a pretensioner 100B shown in Fig. 9(B), on the other hand, for the purpose of improvement in pressure resistance performance, casing 110 is constructed to be larger in thickness than that of pretensioner 100A described above. In this case, with increase in thickness of casing 110, swaged portion 112 which is the part for fixing by swaging of gas generator 1 also increases in thickness. When an amount of projection of second portion 32b of above-described second cover portion 32 of gas generator 1 is not sufficiently large, second portion 32b of above-described second cover portion 32 of gas generator 1 does not project relatively to the tip end of casing 110, and the guide function described above is not exhibited.

In this regard, gas generator 1 according to the present embodiment is constructed such that projecting length A of second portion 32b of second cover portion 32, axial length B of holder 10 in the state after assembly of cup 40 to holder 10, and depth C of female connector portion 32c (see Fig. 1 for each of them) satisfy the first condition (that is, the condition of B < 1.8×A) and/or the second condition (that is, the condition of C < 1.8×A) described above and projecting length A of second portion 32b of second cover portion 32 is noticeably long.

Therefore, the amount of projection of second portion 32b of second cover portion 32 is sufficiently secured. Even when casing 110 increases in thickness, the guide function performed by second portion 32b of second cover portion 32 is exhibited without being lost, and an effect of facilitation of insertion of the male connector can be obtained.

In addition, referring to Fig. 9(A) and (B), when higher gas output is required, increase in axial length of cup 40 for increase in amount of gas generating agent 50 to be filled in gas generator 1 is effective. Such a construction, however, inevitably brings about increase in amount of insertion of gas generator 1 into casing 110. In order to secure an internal volume of a portion of casing 110 where gas generator 1 is not inserted, consequently, casing 110 should accordingly be increased in size. Increase in size of pretensioner 100A or 100B gives rise to a problem.

In this regard, in gas generator 1 according to the present embodiment, the first condition and/or the second condition described above is/are satisfied. Therefore, long projecting length A of second portion 32b of second cover portion 32 is noticeably secured, and hence female connector portion 32c can be arranged as retracting in a direction away from cup 40 along the axial direction of gas generator 1. Accordingly, resin molded portion 30, partition wall portion 12 of holder 10, and igniter 20 can also be arranged as retracting in the direction away from cup 40.

Therefore, the volume of accommodation space 44 is increased by an amount comparable to retraction of resin molded portion 30, partition wall portion 12 of holder 10, and igniter 20, without increase in axial length of cup 40, and accordingly, an amount of filled gas generating agent 50 can be increased. Therefore, by adopting the construction, when higher gas output is required, higher gas output can be achieved without increase in size of pretensioner 100A or 100B.

Fig. 10 is a schematic cross-sectional view showing a method of attaching a shorting clip to the gas generator according to the present embodiment. A method of attaching shorting clip 80 to gas generator 1 according to the present embodiment will now be described with reference to Fig. 10.

In gas generator 1 according to the present embodiment, erroneous activation, for example, due to electrostatic discharging or the like before the gas generator is mounted on a vehicle should be prevented. As shown in Fig. 10, shorting clip 80 is attached to above-described female connector portion 32c of gas generator 1 in order to prevent this erroneous activation. While shorting clip 80 is attached to female connector portion 32c, the pair of terminal pins 22 of the igniter is intentionally shortcircuited by a conductive leaf spring portion (not shown) included in shorting clip 80.

In attachment of shorting clip 80 to gas generator 1, shorting clip 80 is inserted in female connector portion 32c of gas generator 1. At this time, a plurality of locked portions 81 provided in a circumferential surface of shorting clip 80 are locked by locking portion 32b1 provided at the inner surface of female connector portion 32c. As locking portion 32b1 locks locked portions 81, shorting clip 80 is fixed to female connector portion 32c.

Shorting clip 80 is provided with a hollow portion (not shown) where the pair of terminal pins 22 of igniter 20 is to be received. In the hollow portion, the leaf spring portion described above is arranged. This leaf spring portion is constructed as being in contact with both of the pair of terminal pins 22 in an elastically biased state while shorting clip 80 is fixed to female connector portion 32c. The state of short-circuiting of the pair of terminal pins 22 is thus maintained.

In gas generator 1 according to the present embodiment, the first condition and/or the second condition described above is/are satisfied so that long projecting length A (see Fig. 1) of second portion 32b of second cover portion 32 is noticeably secured. Therefore, locking portion 32b1 provided in gas generator 1 is provided in a portion of the inner surface of female connector portion 32c defined by second portion 32b described above.

An operation at the time of activation, of gas generator 1 according to the present embodiment will now be described with reference to previously described Fig. 1.

Referring to Fig. 1, when a vehicle on which gas generator 1 according to the present embodiment is mounted collides, collision sensing means separately provided in the vehicle senses collision, and as a result of current flow from the control unit based thereon, igniter 20 is activated. As a result of activation of igniter 20, the ignition agent accommodated in ignition portion 21 is ignited to burn, which results in cleavage of the squib cup.

Flames produced by burning of the ignition agent burst toward accommodation space 44 where gas generating agent 50 is accommodated, as a result of cleavage of the squib cup. Flames ignite and burn gas generating agent 50, and a large amount of gas is generated in accommodation space 44. Burning of this gas generating agent 50 abruptly increases the internal pressure in accommodation space 44. Bottom wall portion 42 of cup 40 thus starts to open from score 42a, and a large amount of generated gas is emitted to the outside of gas generator 1.

Thereafter, the large amount of gas emitted from gas generator 1 is guided to the activation space of the pretensioner in which gas generator 1 is incorporated (that is, the space inside casing 110 described above (see Fig. 9(A) and (B) or the like)), to drive the pretensioner so that one end of the seat belt provided in the seat belt apparatus is strongly drawn in.

The characteristic construction of the gas generator disclosed in the embodiment described above will be summarized as below.

### [Additional Aspect 1]

A gas generator includes
a gas generating agent that generates gas by burning,
a substantially cylindrical cup with bottom where the gas generating agent is accommodated, the cup having one axial end constructed as an open end, and
an igniter assembly having a substantially columnar outer geometry, the igniter assembly closing the open end of the cup by coaxial assembly of the cup.

The igniter assembly includes
an igniter including an ignition portion loaded with an ignition agent and a terminal pin connected to the ignition portion,
a holder in a substantially columnar shape made of metal, the holder including a first end surface which is an axial end surface on a side facing the cup, a second end surface which is an axial end surface on a side not facing the cup, and a through portion through which at least a part of the igniter is inserted, the through portion reaching the first end surface and the second end surface, and
a resin molded portion that fixes the igniter to the holder by filling a space between the igniter and the holder such that the ignition portion faces the gas generating agent.

The first end surface of the holder is provided with an annular collar portion in a projecting shape as surrounding the through portion.

The resin molded portion includes a first cover portion secured to a portion of the first end surface of the holder located around the through portion to cover that portion, a second cover portion secured to a portion of the second end surface of the holder located around the through portion to cover that portion, and a connection portion that connects the first cover portion and the second cover portion to each other by burying the through portion.

The cup includes a flange portion that extends outward from the open end.

An axial end surface of the igniter assembly on the side facing the cup is provided with an annular groove where the flange portion is to be received.

The annular groove has an inner wall surface defined by an outer circumferential surface of the first cover portion.

The annular groove has a bottom surface defined by the first end surface of the holder.

The annular groove has an outer wall surface defined by an inner circumferential surface of the annular collar portion.

As the annular collar portion is bent inward with a sealant having been applied to inside of the annular groove and the flange portion being received in the annular groove, the flange portion is sandwiched between the annular collar portion and the bottom surface of the annular groove with a boundary between the first end surface of the holder exposed on the inside of the annular groove and the outer circumferential surface of the first cover portion being covered with the sealant, so that the cup is assembled to the holder.

### [Additional Aspect 2]

In the gas generator according to Additional Aspect 1,
the second end surface of the holder is provided with a recessed portion that communicates with the through portion,
the second cover portion is provided to include a first portion which is a portion that covers the recessed portion and a second portion that projects from the second end surface of the holder in a portion of the holder where the recessed portion is not provided toward a side opposite to a side where the cup is located, and
a recessed female connector portion where the terminal pin is to be arranged and a male connector for external connection of the igniter through the terminal pin is to be received and held is provided across the first portion and the second portion of the second cover portion.

### [Additional Aspect 3]

In the gas generator according to Additional Aspect 2,
a condition of B < 1.8×A is satisfied where A represents a projecting length of the second portion and B represents an axial length of the holder in a state after the cup is assembled to the holder.

### [Additional Aspect 4]

In the gas generator according to Additional Aspect 2,
a condition of C < 1.8×A is satisfied where A represents a projecting length of the second portion and C represents a depth of the female connector portion.

### [Additional Aspect 5]

In the gas generator according to any one of Additional Aspects 2 to 4,
a portion of an inner surface of the female connector portion defined by the second portion is provided with a locking portion in a recessed shape for holding a shorting clip.

### [Additional Aspect 6]

In the gas generator according to any one of Additional Aspects 2 to 5,
a groove that extends from the through portion and reaches the second end surface of the holder in a portion of the holder where the recessed portion is not provided is provided in a surface of the recessed portion, and
the second cover portion buries the groove.

Though an example in which the gas generator is manufactured in a procedure of application of the sealant in advance to the inside of the annular groove prior to swaging of the annular collar portion is illustrated and described in the embodiment above, the sealant may be applied in advance only to the flange portion of the cup without application of the sealant in advance to the inside of the annular groove prior to swaging of the annular collar portion, or the sealant may be applied to both of the inside of the annular groove and the flange portion prior to swaging of the annular collar portion.

The shape, the construction, the size, the number, the material, and the like of portions shown in the embodiment described above can be modified as appropriate without departing from the gist of the present invention.

The embodiment disclosed herein is thus illustrative and non-restrictive in every respect. The technical scope of the present invention is delimited by the terms of the claims and includes any modifications within the scope and meaning equivalent to the description in the terms of the claims.

### REFERENCE SIGNS LIST

1 gas generator; 2 igniter assembly; 2a annular groove; 2b boundary; 10 holder; 10a first end surface; 10b second end surface; 10c through portion; 11 barrel portion; 12 partition wall portion; 13 annular collar portion; 14 recessed portion; 14a groove; 20 igniter; 21 ignition portion; 22 terminal pin; 30 resin molded portion; 31 first cover portion; 31a reinforcement portion; 32 second cover portion; 32a first portion; 32b second portion; 32b1 locking portion; 32c female connector portion; 33 connection portion; 40 cup; 41 sidewall portion; 41a open end; 42 bottom wall portion; 42a score; 43 flange portion; 44 accommodation space; 50 gas generating agent; 60 sealant; 80 shorting clip; 81 locked portion; 100A, 100B pretensioner; 110 casing; 111 step portion; 112 swaged portion; 200 mold; 201 upper mold; 201a gate; 202A lower inner mold; 202B lower outer mold; 203 cavity; 203a narrow channel; 203b wide channel; 210 dispenser.

## Claims

1. A gas generator comprising:
a gas generating agent that generates gas by burning;
a substantially cylindrical cup with bottom where the gas generating agent is accommodated, the cup having one axial end constructed as an open end; and
an igniter assembly having a substantially columnar outer geometry, the igniter assembly closing the open end of the cup by coaxial assembly of the cup, wherein
the igniter assembly includes
an igniter including an ignition portion loaded with an ignition agent and a terminal pin connected to the ignition portion,
a holder in a substantially columnar shape made of metal, the holder including a first end surface which is an axial end surface on a side facing the cup, a second end surface which is an axial end surface on a side not facing the cup, and a through portion through which at least a part of the igniter is inserted, the through portion reaching the first end surface and the second end surface, and
a resin molded portion that fixes the igniter to the holder by filling a space between the igniter and the holder such that the ignition portion faces the gas generating agent,
the first end surface of the holder is provided with an annular collar portion in a projecting shape as surrounding the through portion,
the resin molded portion includes a first cover portion secured to a portion of the first end surface of the holder located around the through portion to cover that portion, a second cover portion secured to a portion of the second end surface of the holder located around the through portion to cover that portion, and a connection portion that connects the first cover portion and the second cover portion to each other by burying the through portion,
the cup includes a flange portion that extends outward from the open end,
an axial end surface of the igniter assembly on the side facing the cup is provided with an annular groove where the flange portion is to be received,
the annular groove has an inner wall surface defined by an outer circumferential surface of the first cover portion,
the annular groove has a bottom surface defined by the first end surface of the holder,
the annular groove has an outer wall surface defined by an inner circumferential surface of the annular collar portion, and
as the annular collar portion is bent inward with a sealant having been applied to inside of the annular groove and the flange portion being received in the annular groove, the flange portion is sandwiched between the annular collar portion and the bottom surface of the annular groove with a boundary between the first end surface of the holder exposed on the inside of the annular groove and the outer circumferential surface of the first cover portion being covered with the sealant, so that the cup is assembled to the holder.

2. The gas generator according to claim 1, wherein
the second end surface of the holder is provided with a recessed portion that communicates with the through portion,
the second cover portion is provided to include a first portion which is a portion that covers the recessed portion and a second portion that projects from the second end surface of the holder in a portion of the holder where the recessed portion is not provided toward a side opposite to a side where the cup is located, and
a recessed female connector portion where the terminal pin is to be arranged and a male connector for external connection of the igniter through the terminal pin is to be received and held is provided across the first portion and the second portion of the second cover portion.

3. The gas generator according to claim 2, wherein
a condition of B < 1.8×A is satisfied where A represents a projecting length of the second portion and B represents an axial length of the holder in a state after the cup is assembled to the holder.

4. The gas generator according to claim 2, wherein
a condition of C < 1.8×A is satisfied where A represents a projecting length of the second portion and C represents a depth of the female connector portion.

5. The gas generator according to any one of claims 2 to 4, wherein
a portion of an inner surface of the female connector portion defined by the second portion is provided with a locking portion in a recessed shape for holding a shorting clip.

6. The gas generator according to any one of claims 2 to 4, wherein
a groove that extends from the through portion and reaches the second end surface of the holder in a portion of the holder where the recessed portion is not provided is provided in a surface of the recessed portion, and
the second cover portion buries the groove.
